# EUROPEAN PATENT SPECIFICATION

(11) **EP 1 584 542 B1**
(45) Date of publication and mention of the grant of the patent: **14.03.2007**
(21) Application number: 05007282.6
(22) Date of filing: 04.04.2005
(51) Int. Cl.: B62D 5/04, B62D 3/08, F16C 29/06, F16C 19/18

(54) **Ball screw assembly for automobiles**
Kugelgewindeeinheit für Kraftfahrzeuge
Assemblage vis-écrou à billes pour véhicules automobiles

(30) Priority: 07.04.2004 JP 2004112892
(43) Date of publication of application: 12.10.2005
(73) Proprietor: NTN CORPORATION, Osaka-shi, Osaka 550-0003 (JP)
(72) Inventor: Tateishi, Koji, Iwata-shi 438-0037 Shizuoka (JP); Yoshioka, Morihisa, Iwata-shi 438-0037 Shizuoka (JP); Ikeda, Yoshinori, Iwata-shi 438-0037 Shizuoka (JP)
(74) Representative: Gassner, Wolfgang

(56) References cited:
- EP-A- 0 103 316
- EP-A- 0 289 441
- EP-A- 1 193 422
- DE-A1- 10 214 481
- FR-A- 2 703 122
- GB-A- 897 008
- US-A- 3 815 435
- US-A- 3 961 541
- US-A- 5 622 082
- US-A1- 2002 063 014
- US-A1- 2003 051 569

## Description

### BACKGROUND OF THE INVENTION

### (Field of the Invention)

The present invention generally relates to a ball screw assembly and, more particularly, to the ball screw assembly of a kind used in an actuator for gear shifting or selection of an automated manual transmission (AMT) for automobiles or in any other various actuators for automobiles, an assembly according to the preamble of claim 1 is known from Fig. 20 of US-A-20020063014.

### (Description of the Prior Art)

The ball screw assembly is known in the art to convert torque to thrust as either an externally helically grooved screw, member or an internally helically grooved nut member turns relative to the other then moving in a linear direction. This ball screw assembly is currently available in various types and can be classified as a bridge type, a return tube type, a guide plate type, an end cap type and so on depending on the ball recirculating system. The bridge type ball screw assembly makes use of bridge members on an internally helically grooved nut member as a ball recirculating guide. Each of those bridge members is formed with a helical connecting groove for successively recirculating the balls therethrough from one convolution of the helical groove in an externally helically grooved screw member to the next adjoining convolution of the helical groove in the externally helically grooved screw member.

The bridge type ball screw assembly is admittedly excellent in compactness, allows ball recirculating zones to be arranged equidistantly in a direction circumferentially thereof and exhibits a good dynamic balance when used in association with revolution of the nut member. Accordingly, the bridge type ball screw assembly is in most cases used in the field of application where the nut member is desired to be driven relative to the externally helically grooved screw member. Also, particularly in the case of the bridge type ball screw assembly, not only can the space between the ball recirculating zones be arranged equidistantly as desired, but also a relatively large freedom of design can be obtained in choosing the space between the neighboring turns of a helical row of balls, i.e., the space between the neighboring convolutions of the helically extending groove in the screw member, to suit to the load bearing capacity.

Considering that in the field of automobiles, the various spaces are limited for accommodating component parts, compactness of any component part is generally a prime requisite to be considered and, therefore, when it comes to the ball screw assembly, the bridge type ball screw assembly is largely employed.

The bridge members employed in the bridge type ball screw are in most case manufactured by the use of a cold forging technique. See, for example, the Japanese Laid-open Patent Publication No. 10-82458.

Also, the Japanese Laid-open Patent Publication No. 2001-289301, for example, discloses another prior bridge type ball screw assembly, in which each of the bridge members is formed with a plurality of helical connecting grooves so that not only can the lead of the screw member be reduced, but the load bearing capacity can also be increased with increase of the number of the balls that can be recirculated within the nut member. This patent publication also discloses the manufacture of the bridge members, each having the plural helical connecting grooves, by the use of a sintered alloy (MIM) prepared by the injection molding technique, the fixing of the bridge members by means of plastic deformation, the use of wing areas formed on each of the bridge members for engagement in the internally helical groove in the nut member. The use of the wing areas is effective to ensure prevention of departure or falling of the bridge members.

Where as is the case with the conventional bridge member the cold forging technique is used to manufacture it, and particularly where the bridge member is of a complicated shape having the wing areas such as described above, a relatively high precision machining is required, tending the bridge member to be susceptible to cracks. In order for the bridge member to be machined with no crack being accompanied, a relatively large cost is required.

With the conventional bridge member, the bridge member is generally fixed in position on the nut member by inserting it in a mounting opening, defined in the nut member, from a direction radially outwardly of the nut member, filling a resinous agent such as an adhesive agent in a space left above the bridge member within the nut member and finally allowing the filled resinous agent to be hardened. Alternatively, a tapped hole is formed in a portion of the nut member adjacent the bridge member so that a set screw can be threaded thereinto to fix the bridge member in the nut member.

However, where the resinous agent is employed to fix the bridge member in position in the nut member, failure to satisfy a certain condition such as, for example, an insufficient degreasing leads to a high possibility of the bridge member being undesirably departed from the nut member. The use of the tapped hole in combination with the set screw to fix the bridge member in the nut member requires an area of the bridge member, where the tapped hole is formed, to be carburized and, on the other hand, the set screw must have a sufficient strength. For those reasons, it is difficult to mass-produce the bridge type ball screws for use in automobiles and, at the same time, to secure reliability as a product.

Since the bridge member employed in the prior art bridge type ball screw assembly disclosed in the second discussed patent publications is made of the sintered alloy (MIM) by the use of the injection molding technique, the bridge member, even though complicated in shape, has an excellent moldability. Also, since the wing areas engageable with the internal helical groove in the nut member and a staking technique are employed for accomplishing the fixture of the bridge member, not only can a highly reliable fixture be accomplished, but also the bridge member so designed is suited to a mass-production.

However, since the plural connecting grooves are formed in the single bridge member, the capability of the ball recirculating zones to be equidistantly arranged in the circumferential direction and the capability of the space between the neighboring turns of the helical row of balls, i.e., the space between the neighboring convolutions of the helically extending groove in the screw member, to be chosen as desired, both of which are considered advantages of the bridge type ball screw assembly, cannot be appreciated. Also, since the wing areas and the staking portion appear on the same side of the bridge member, the bridge member is often found to be difficult to mold and no satisfactory stability will be obtained depending on the shape of the bridge member.

### SUMMARY OF THE INVENTION

In view of the foregoing, the present invention is intended to provide a low-cost, mass-producible ball screw assembly suitable for use in automobiles, in which ball recirculating zones can be designed compact, a highly reliable fixture of a bridge member can be achieved and which has an excellent capability of the ball recirculating zones to be equidistantly arranged in the circumferential direction and an excellent capability of the space between the neighboring convolutions of a helically extending groove in a screw member, to be chosen as desired.

Another object of the present invention is to provide the ball screw assembly of the type referred to above, in which molding of the bridge member is eased and the stability of the bridge member being fixed is increased.

In order to accomplish these objects of the present invention, a ball screw assembly utilizable in an actuator for automobiles, which is designed in accordance with the present invention, is a bridge type ball screw assembly. This bridge type ball screw assembly includes a screw member with an externally helically extending groove defined therein, a nut member with an internally helically extending groove defined therein, a plurality of balls that recirculate between the grooves of the screw and nut members, and a bridge member engaged in a mounting opening defined in the nut member. This bridge member has a single connecting groove for communicating between the neighboring convolutions of the internal helical groove of the nut member to allow the balls to be successively recirculated from one convolution to the other and is made by the use of metal injection molding technique. This bridge member has wing areas engaged in the internal helical groove of the nut member to avoid an undesirable separation of the bridge member in a direction radially outwardly of the nut member. The metal injection molding technique referred to above is a process of powdery metallurgy in which the injection molding method is employed, and the bridge member employed in the ball screw assembly of the present invention is made of a sintered alloy.

The bridge member has wing areas engageable with the internal helical groove of the nut member, an undesirable separation of the bridge member in the radially outward direction of the nut member can advantageously be avoided assuredly. Although the presence of the wing areas render the bridge member as a whole to be complicated in shape, the use of the metal injection molding technique makes it possible for the bridge member to be precisely manufactured affordably even though complicated in shape and, also, allows the bridge member to be mass-produced.

Where the wing areas are engaged in the internal helical groove of the nut member, any deviation in dimension of the wing areas is closely connected with the accuracy of steps between the connecting groove of the bridge member and the internal helical groove of the nut member, but the use of the metal injection molding technique allows the bridge member to be precisely manufactured, such that the step between a ball pick-up area at an end of the connecting groove in the bridge member and a root of the internal helical groove of the nut member can be easily suppressed for a smooth recirculation of the balls. Because of this, the bridge member can be highly reliably fixed in position in the nut member and can be manufactured at a reduced cost and on a mass-production basis. Also, since the ball screw assembly of the present invention uses the bridge member, a ball-recirculating zone defined in the bridge member can be compact compared with ball-recirculating zones of ball screw assemblies of other types. Also, since the bridge member has only one connecting groove defined therein, the equidistantly spaced arrangement of the ball-recirculating zones and a relatively large freedom of design in choosing the space between the ball-recirculating zones can be accomplished as compared with the bridge member having the plural connecting grooves.

In the ball screw assembly for automobiles according to the present invention, the bridge member referred to above may has a staking portion to be fixed to an outer diameter portion of the nut member, as defined in claim 1. As the staking portion is employed, an undesirable separation of the bridge member in a direction radially outwardly of the nut member can advantageously be prevented by the wing areas and an undesirable separation of the bridge member in a direction radially inwardly of the nut member can advantageously be prevented by the staking portion. Accordingly, avoidance of the separation of the bridge member during assemblage and stabilization of the bridge member in a condition mounted on the nut member after the staking can be both achieved, resulting in increase of the reliability. Also, since the bridge member is fixed by the use of a staking technique, the machinability and the mass-producibility will be excellent.

Preferably, the staking portion is formed at each of opposite end portions of the bridge member that are spaced in a direction lengthwise thereof. As the bridge member is of a type formed with only one connecting groove, the bridge member will represents an elongated shape extending in a direction conforming to the direction of extension of such connecting groove. If in such case the staking portion is provided at each of the lengthwisely opposite end portions of the bridge member such as described above, fixture of the bridge member to the nut member can be further stabilized. Also, the positioning of the staking portions at the lengthwisely opposite end portions of the bridge member is effective to facilitate molding of the bridge member even though the latter is complicated in shape having the wing areas and the staking portions, since the staking portions do not overlap with the direction of extension of the wing areas.

In a preferred embodiment of the present invention, the bridge member has a flat surface area defined at a location substantially intermediate of the length of the bridge member and lying adjacent an outer peripheral surface of the nut member. Also, this flat surface area preferably has a length that is equal to or larger than 50% of the total length of the bridge member.

The bridge member is required to be highly precisely manufactured in order to eliminate any deviation in mounting. Although this highly precise manufacture is possible with the metal injection molding technique, depending on the shape of the bridge member, the precision of the bridge member may be undesirably lowered by the effect of its own weight when the bridge member is baked in a vacuum furnace.

To alleviate the above discussed problem, the provision of the flat surface area in the bridge member is effective to allow the bridge member to be placed on a support surface with the flat surface area held in contact therewith during the baking process and, therefore, an undesirable deformation of the bridge member by the effect of its own weight can advantageously be avoided. In such case, if the proportion of the flat surface area is too small, the effect of avoiding the undesirable deformation will be insufficient and difficulty will be encountered in maintaining the precision. However, if the proportion of the flat surface area is 50% or higher of the total length of the bridge member, the precision maintenance can be accomplished.

Also, if the flat surface area has a length not greater than 70% of the total length of the bridge member, the staking portions can easily be formed in opposite end portions of the flat surface area.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1A is a longitudinal sectional view of a ball screw assembly for automobiles according to a first preferred embodiment of the present invention;
Fig. 1B is a fragmentary diagram showing a bridge mounting portion of a nut member of the ball screw assembly of Fig. 1A on a developed form;
Fig. 1C is an end view, on an enlarged scale, of the bridge mounting portion of the nut member shown in Fig. 1B;
Fig. 1D is a schematic perspective view of a bridge member employed in the ball screw assembly of Fig. 1A;
Fig. 2 is a front view of the ball screw assembly for automobiles shown in Fig. 1A;
Fig. 3A is a front view of the nut member.
Fig. 3B is a side view; with a portion cut away, of the nut member;
Fig. 4A is a longitudinal sectional view of the nut member;
Fig. 4B is a diagram showing the nut member in a developed form;
Fig. 4C is a fragmentary sectional view showing, on an enlarged scale, a portion of the nut member where a bridge mounting opening is formed;
Fig. 4D is a front elevational view of the bridge mounting opening defined in the nut member;
Fig. 5A is a bottom plan view of the bridge member as viewed from a direction radially inwardly of the nut member;
Fig. 5B is a plan view of the bridge member as viewed from a direction radially outwardly of the nut member;
Fig. 5C is a side view of the bridge member;
Fig. 6A is a sectional view of the bridge member;
Fig. 6B is a sectional view of the bridge member after the staking portions have been staked;
Fig. 7 is a front view of the ball screw assembly for automobiles according to another preferred embodiment of the present invention;
Fig. 8 is a top plan view of a switching mechanism of an automated manual transmission of a kind utilizing the ball screw assembly of the present invention;
Fig. 9 is a cross-sectional view, on an enlarged scale, taken along the line A-A in Fig. 8; and
Fig. 10 is a cross-sectional view, on an enlarged scale, taken along the line B-B in Fig. 8.

### DETAILED DESCRIPTION OF THE EMBODIMENTS

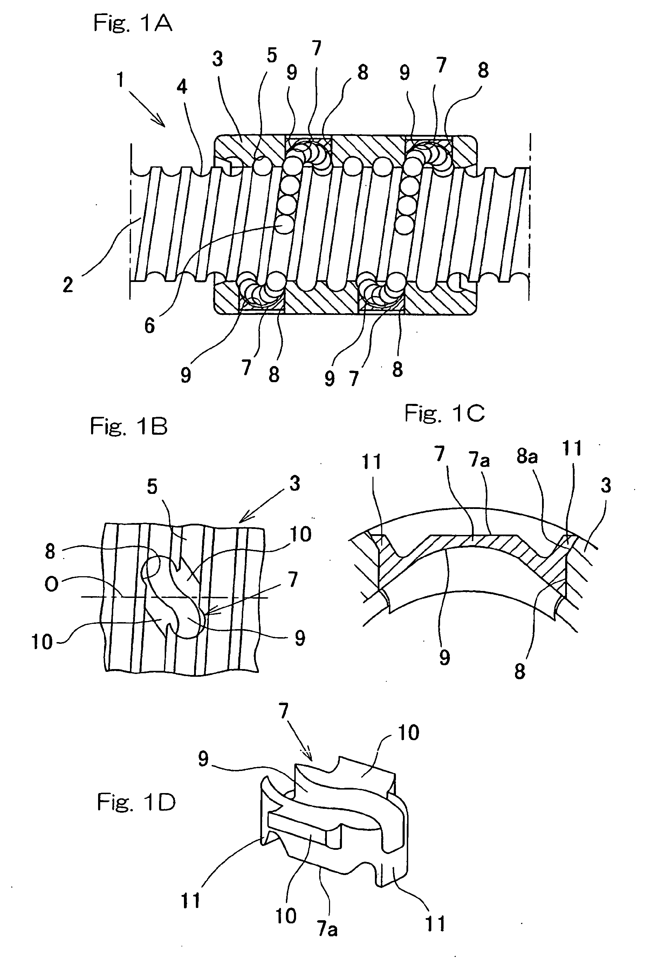

A ball screw assembly according to a first preferred embodiment of the present invention will now be described with particular reference to Figs. 1A to 6B. The ball screw assembly 1 shown therein is of a bridge type conveniently employed in an automobile actuator. Although, the automobile actuator utilizing the ball screw assembly 1 according to this illustrated embodiment is assumed to be an automobile automated manual transmission, the automobile actuator can be an automobile powered steering actuator or a rear wheel steering actuator.

This bridge type ball screw assembly 1 includes a screw member 2 having an externally helically extending groove 4 defined on an outer periphery thereof, a nut member 3 having an internally helically extending groove 5 so defined on an inner periphery thereof as to cooperate with the external helical groove 4 of the screw member 2 to define a helical ball path between the screw and nut members 2 and 3, and a plurality of balls 6 that recirculate within and along the helical ball path.

The nut member 3 is provided with bridge members 7 each as an element for allowing the balls 6 to be successively recirculated from one convolution to the next adjacent convolution of the helical ball path. Each of those bridge members 7 is engaged in a respective mounting opening 8 defined in the nut member 3 so as to extend completely across the wall thickness of the nut member 7 and has an inner surface formed with a single connecting groove 9 through which the neighboring convolutions of the internal helical groove 5 of the nut member 3 are communicated with each other. The connecting grooves 9 of those bridge members 7 cooperate with the helical ball path, defined by the external and internal helical grooves 4 and 5 between the screw and nut members 2 and 3, to define the circuit along which the balls 6 recirculate successively. Each of the balls 6, when passing along the connecting groove 9 of each of the bridge members 7, rides over a crest of the external helical groove 4 of the screw member 2.

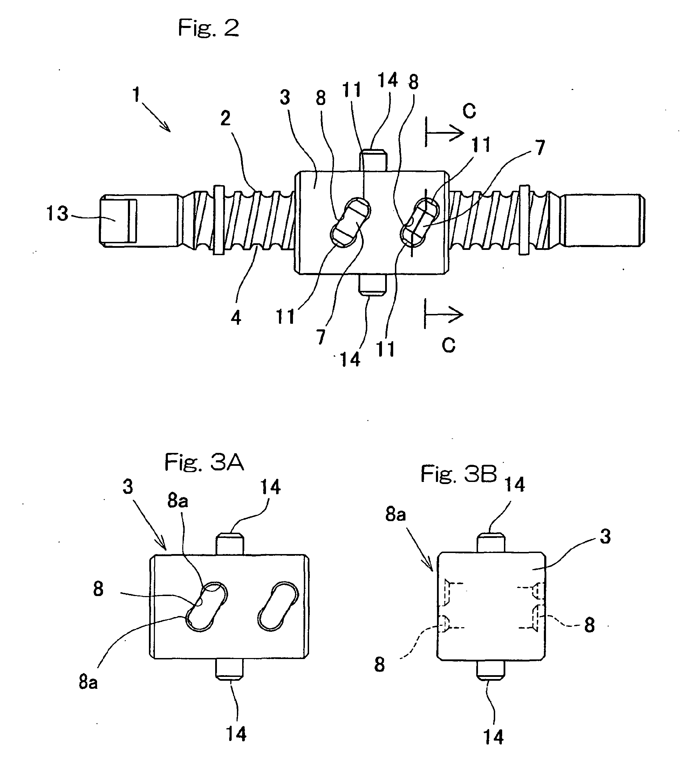

In the bridge type ball screw assembly 1 according to the illustrated embodiment, each of the bridge members 7 has a pair of wing areas 10 engaged in the internal helical groove 5 of the nut member 3 and also has a pair of staking portions 11 adapted to be fixed to an outer peripheral portion of the nut member 3. Each bridge member 7 is made of a sintered alloy formed by the use of a metal injection molding technique. This bridge member 7 generally has such a shape as shown in Fig. 1D, whereas Fig. 1C illustrates, on an enlarged scale, a cross-sectional view thereof taken along the line C-C in Fig. 2.

As best shown in Fig. 1B, the connecting groove 9 of the bridge member 7 extends slantwise so as to cross the direction of turn of the internal helical groove 5 of the nut member 3, which is also slantwise relative to the longitudinal axis O of the nut member 3. It is to be noted that the length or the longitudinal direction of the bridge member 7 lies in a direction conforming to the direction of extension of the associated connecting groove 9 in the bridge member 7. When viewed from top, the connecting groove 9 represents a generally S-shaped configuration having its opposite ends smoothly continued to the neighboring convolutions of the internal helical groove 5 of the nut member 3, respectively.

The wing areas 10 of the bridge member 7 serve to avoid an undesirable separation or departure of the bridge member 7 in a direction radially outwardly of the nut member 3. Those wing areas 10 protrudes laterally outwardly from respective lengthwise side faces of the bridge member 7 in respective directions opposite to each other and in a direction conforming to the direction of extension of the internal helical groove 5 of the nut member 3 and are engaged respectively in the neighboring convolutions of the internal helical groove 5 of the nut member 3. This bridge member 7 is, after having been inserted into the corresponding mounting opening 8 from a direction radially inwardly of the nut member 3, fixed in position with the wing areas 10 engaged in the respective neighboring convolutions of the internal helical groove 5 of the nut member 3.

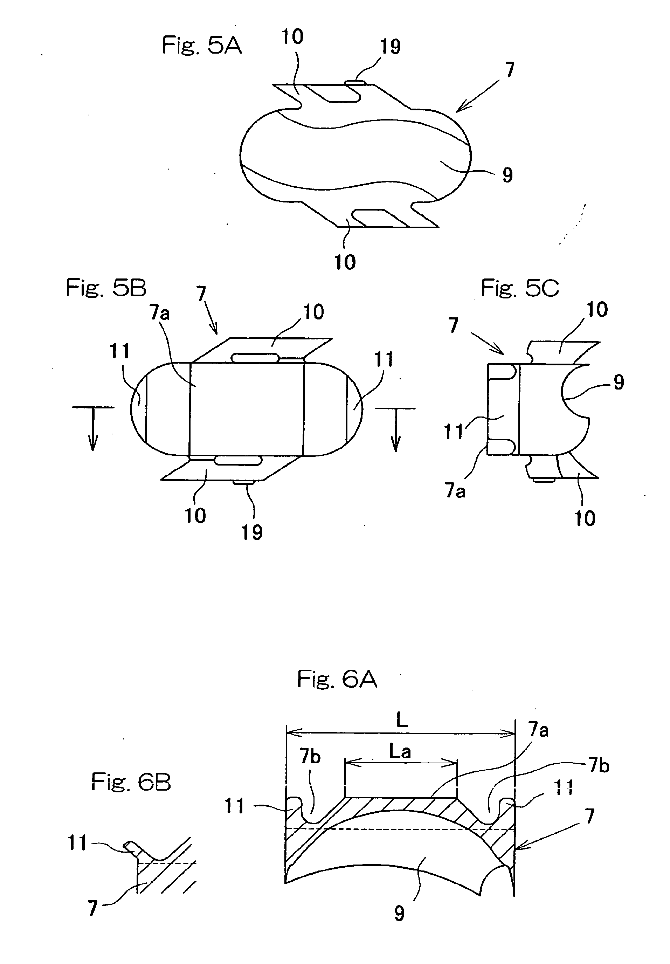

The staking portions 11 are each in the form of a projection extending from one end of the bridge member 7 in a direction radially outwardly of the nut member 3 and generally at right angles to the lengthwise direction of the bridge member 7. In a condition of the bridge member 7 as manufactured, the staking portions 11 stand upright as best shown in Fig. 6A, but after the bridge member 7 has been inserted into the respective mounting opening 8 with the wing areas 10 seated in the respective neighboring convolutions of the internal helical groove 5 of the nut member 3, the staking portions 11 are staked to allow them to bend at their root portions to extend slantwise in a direction outwardly of the lengthwise sense of the bridge member 7 as best shown in Fig. 6B. In this way, the staking portions 11 are engaged in respective opposite seats 8a, defined in a radially outer open edge of the mounting opening 8 in the nut member 3 so as to flare radially outwardly thereof, as shown in Fig. 1C.

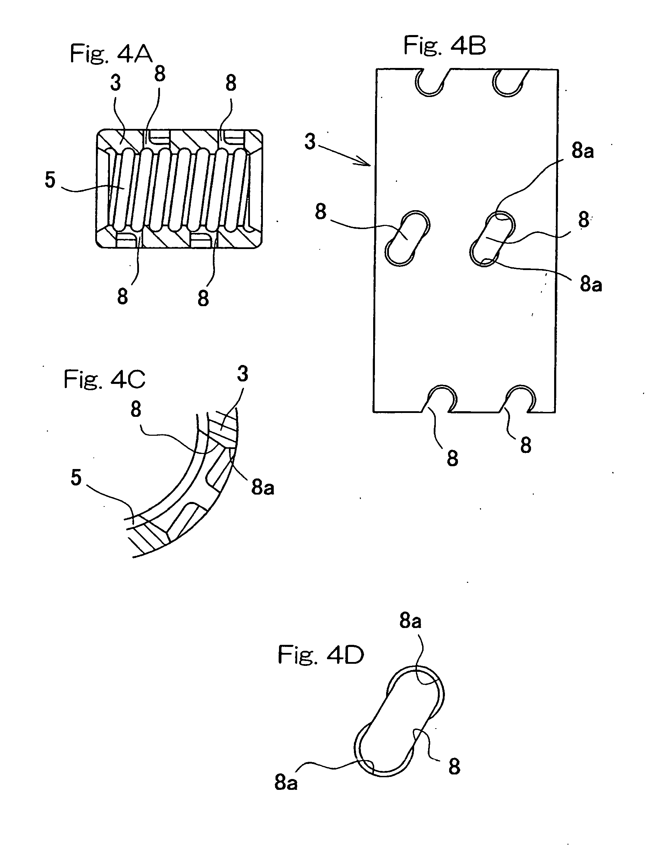

When viewed from top, the mounting opening 8 represents a track shape having semicircular ends opposite to each other as shown in Figs. 4C and 4D. The outwardly flared seats 8a referred to above are formed respectively in the semicircular ends of the mounting opening 8 in the form of respective portions of a counterbore of a radially outwardly flaring shape. The staking portions 11 referred to above are, when staked in the manner described above, firmly urged against the respective outwardly flared seats 8a.

As hereinabove described, the bridge member 7 is fixed to the nut member 3 within the respective mounting opening 8, with the wing areas 10 engaged to a radially inner portion of the nut member 3 and with the staking portions 11 engaged to a radially outer portion of the nut member 3.

The specific shape of the bridge member 7 will now be described in detail with particular reference to Figs. 6A and 6B. The bridge member 7 has a flat surface area 7a defined at a location substantially intermediate of the length of the bridge member 7 and lying adjacent an outer peripheral surface of the nut member 3, with the radially outwardly protruding staking portions 11 formed on respective sides of the flat surface area 7a through radially inwardly depressed zones 7b each intervening between the adjacent staking portion 11 and the flat surface area 7a. The flat surface area 7a is utilized, when the bridge member 7 is baked during the manufacture thereof, to allow the bridge member 7 to be placed on a support surface (not shown) with the flat surface area 7a held in contact therewith and is therefore a flat area. The projections defining the respective staking portions 11 have a length sufficient to allow them to terminate at a position level with or at a position slightly lower than flat surface area 7a.

In the illustrated embodiment, the flat surface area 7a of the bridge member 7 has a length La within the range of 50 to 70%, and preferably within the range of 50 to 60% of the total length L of the bridge member 7. By way of example, if the total length L is 11 mm, the flat surface area 7a has a length La of 5.6 mm.

A gate 19 (Figs. 5A and 5B) in the bridge member 7, which is utilized during the injection molding, is preferably defined at a free end face of the wing areas 10.

Hereinafter, the details of and materials used to form the screw member 2, the nut member 3 and the bridge member 7, all shown in Fig. 1A, will now be described. As best shown in Fig. 2, the external helical groove 4 of the screw member 2 is formed in a zone of the screw member 2 excluding opposite end portions thereof, and a coupling engagement 13 is provided in one of the opposite end portions of the screw member 2. This screw member 2 is made of a steel material, and the external helical groove 4 is formed by form rolling. Only portions of the screw member 2, where the external helical groove 4 and the coupling engagement 13 are formed, respectively, are subjected to a heat treatment such as, for example, induction hardening. Alternatively, the screw member 2 in its entirety may be subjected to a heat treatment such as carburizing and hardening.

As best shown in Figs. 3A and 3B, the nut member 3 has a pair of trunnions protruding laterally outwardly from opposite sides thereof, respectively. Also as best shown in Fig. 4A, the nut member 3 has a plurality of, for example, four, mounting openings 8 defined therein and the bridge member 7 is fixedly engaged in each of those mounting openings 8. This nut member 3 is made of a steel material and the internal helical groove 5 is formed by the use of a helical grinding technique such as, for example, a tapping technique, followed by a heat treatment. For the heat treatment, the nut member 3 may be carburized and hardened under the vacuum atmosphere. Alternatively, the nut member 3 may be ground (female screw grinding) to finish the internal helical groove 5 after the nut member 3 having a rough helical groove formed therein has been heat treated by, for example, a gas carburizing process.

The bridge member 7 is made by the use of a metal injection molding technique (hereinafter referred to as MIM technique) and is made of a sintered alloy. As is well known to those skilled in the art, the MIM technique is a process of conditioning a powdery metallic material in a plasticizable form, injection-molding the plasticizable metallic material to form a molding and finally baking the molding. More specifically, a powdery metallic material is kneaded together with a binder including a plastic material and a wax by the use of a kneading machine to provide a kneaded material, which is subsequently palletized to form pellets. For the powdery metallic material, any metallic material that can be eventually carburized and hardened may be conveniently employed and may be a powdery iron material containing carbon and nickel.

The pellets so formed in the manner described above are supplied into a hopper of an injection-molding machine (not shown) and is injected in a molten form into a mold assembly having a mold cavity complemental in shape to the shape of the bridge member 7. The injection-molding machine that can be employed in the practice of the present invention may be the one identical with that used in plastics molding. The molded bridge member 7 that has not been sintered yet is then baked by a heat treatment such as, for example, a carburizing process within a vacuum furnace or the like.

With the ball screw assembly 1 for automobiles of the structure described hereinbefore, since the bridge member 7 has the wing areas 10 protruding outwardly from the inner peripheral portion thereof for engagement in the neighboring convolutions of the internal helical groove 5 of the nut member 3 and is fixed in position by the staking portions 11 formed in the outer peripheral portion thereof, it is possible to firmly lock the bridge member 7 in position within the respective mounting opening 8 in the nut member 3. Also, fixing of the bridge member 7 in the manner described above can easily be accomplished. Specifically, prevention of an undesirable separation or drop-out of the bridge member 7 during the assemblage and stabilization of the mounted bridge member 7 after the staking can advantageously be accomplished.

Where the structure is employed, in which the wing areas 10 are engaged in the internal helical groove 5 of the nut member 3 such as shown and described in connection with the foregoing embodiment of the present invention, any deviation in dimension of the wing areas 10 is closely connected with the accuracy of steps between the connecting groove 9 of the bridge member 7 and the internal helical groove 5 of the nut member 3. For this reason, unless the precision of the wing areas 10 stabilizes, this type of engagement of the wing areas 10 in the internal helical groove 5 will not establish. However, since in the present invention the bridge member 7 is made by the use of the MIM technique, it is possible to achieve a precise fixture of the bridge member 7.

In the case of the standard sintered component parts, the tolerance of ±0.1 to 0.2 mm is required, but in the case of the MIM component parts, it is possible to finish up to the tolerance of ±0.05 mm. Because of this, it is possible to secure the precision of the above mentioned step, allowing the balls 6 to be successively recirculated smoothly along the intended circuit. Considering that the automobile actuator, particularly that used in the transmission, affects the automobile driver's feeling, a smooth operation is desired.

Where the staking portions 11 of the bridge member 7 are provided at the lengthwisely spaced opposite ends of the bridge member 7, the stabilized fixture of the bridge member 7 in the nut member 3 can be further enhanced. Also, since in the present invention the wing areas 10 and the projecting staking portions 11 are both provided in the bridge member 7 without allowing the respective directions of extension of them to overlap with each other, the mold assembly used in the practice of the injection molding technique can be simplified and the bridge member 7 can easily be molded.

The bridge member 7 employed in the ball screw assembly 1 of the present invention has the flat surface area 7a defined in the vicinity of the outer peripheral surface of the nut member 3 and having the length La so chosen to be not smaller than 50% of the total length L of the bridge member 7. Accordingly, the bridge member 7 when being baked will hardly deform. In addition, the length La of the flat surface area 7a is chosen to be not greater than 70%, preferably 60%, of the total length L of the bridge member 7, the staking portions 11 on respective ends of the flat surface area 7a can be advantageously easily formed.

While the bridge member 7 is baked within, for example, the vacuum furnace, the bridge member 7 is placed on the support surface in a posture substantially reverse to that shown in Fig. 6A, with the flat surface area 7a held in contact with the support surface. While, unless care is taken, the bridge member 7 having been not yet baked will have its non-supported opposite end portions drooping by the effect of their own weight, selection of the length La of the flat surface area 7a, which is not smaller than 50% of the total length L of the bridge member 7, is effective to sufficiently avoid the undesirable deformation of the bridge member 7 securing the dimensional precision of the bridge member 7.

Also, the bridge member 7 employed in the ball screw assembly 1 of the present invention has only one connecting groove 9 defined therein and, accordingly, the equidistantly spaced arrangement of the connecting grooves 9 and the relatively large freedom of design choice in determining the space between the connecting grooves 9 can be accomplished advantageously as compared with the bridge member having the plural connecting grooves. In other words, while the distance over which the balls 6 can travel during the recirculation thereof is determined by the spacing between the connecting grooves 9 of the bridge members 7, the use of the single connecting groove 9 in the bridge member 7 makes it possible to change the position of the connecting grooves 9 as desired by changing the arrangement of the bridge members 7. For this reason, the proof moment load or the like can advantageously be increased by suitably selecting the space between the recirculating rows of the balls, that is, by selecting the space between the neighboring turns of a helical row of the balls 6.

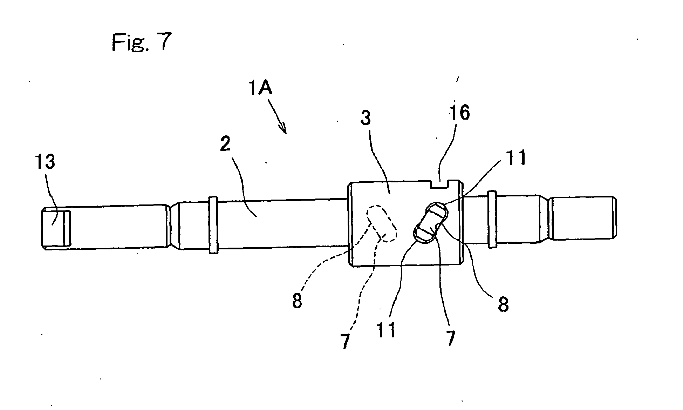

Fig. 7 illustrates another preferred embodiment of the present invention. The ball screw assembly 1A for automobiles shown therein includes the nut member 3 having no trunnions such as shown by 14 in Fig. 2 and, instead, having an engagement groove 16 defined in an outer periphery thereof for engagement with an external component part. This nut member 3 has two bridge members 7, one on a front side thereof and the other on a rear side thereof.

It is, however, to be noted that other structural features of the ball screw assembly 1A than those described above are substantially similar to those shown and described in connection with the foregoing embodiment with reference to Figs. 1 to 6 and, therefore, the details thereof are not reiterated for the sake of brevity.

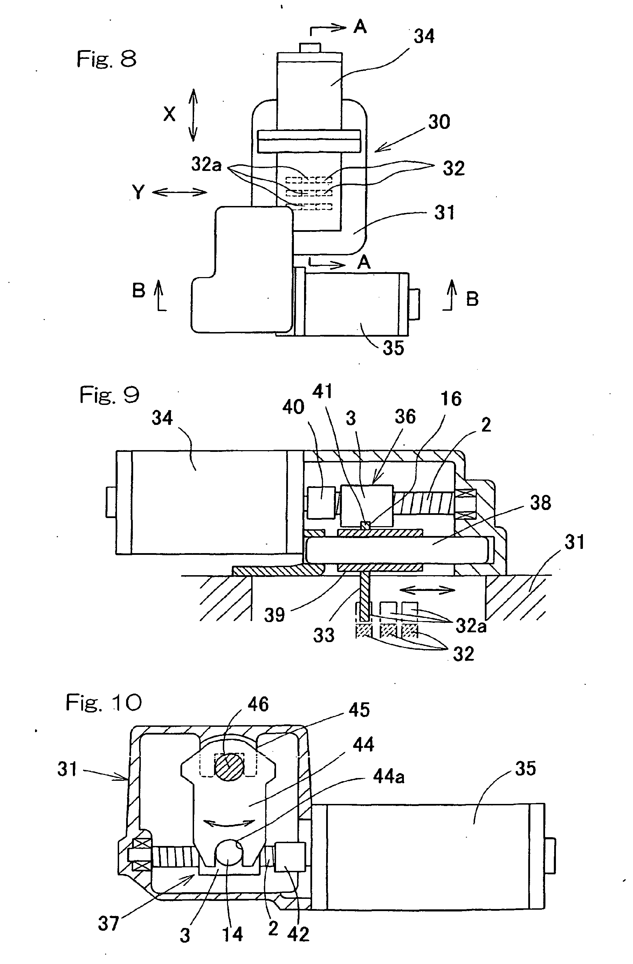

Figs. 8 to 10 illustrates an example of a gear shifting mechanism employed in the automated manual transmission (AMT) employing the ball screw assembly 1 or 1A according to the present invention. The illustrated gear shifting mechanism 30 is of a design, in which when an arbitrarily chosen one of a plurality of parallel retractable shift rails 32 disposed within a housing 31 is moved in a direction conforming to the direction Y lengthwise thereof a gear shifting can be accomplished to change a transmission gear (not shown). Each of the parallel shift rails 32 has a cutout 32a, in which a shifting finger 33 shown in Fig. 9 is engageable. Depending on the position of the shifting finger 33, one of the shift rails 32 that is to be selectively advanced or retracted can be selected.

For selectively advancing or retracting the shifting finger 33 in the manner described above, a first drive motor 34 and a first ball screw assembly 36 are utilized. Also, for rocking the shifting finger 33 to advance or retract the selected shift rail 32, a second drive motor 35 and a second ball screw assembly 37, both shown in Fig. 10, are utilized. For the first ball screw assembly 36 shown in Fig. 9, the ball screw assembly 1A shown and described in connection with the second embodiment with reference to Fig. 7 is employed, whereas for the second ball screw assembly 37 shown in Fig. 10, the ball screw assembly 1 shown and described in connection with the first embodiment with reference to Figs. 1 to 6 is employed.

Referring to Fig. 9, a first shaft member 38 is retractably disposed within the housing 31 and a sleeve 39 is mounted on an outer periphery of the first shaft member 38 for movement in a direction axially thereof relative to the shaft member 38 and also for rotation together with the first shaft member 38. This sleeve 39 is provided with the shifting finger 33 protruding radially outwardly therefrom. The screw member 2 of the first ball screw assembly 36 is arranged so as to extend parallel to the first shaft member 38 and is rotatably supported by the housing 31. One end of the screw member 2 is drivingly connected with an output shaft of the first drive motor 34 through a coupling 40 so that the screw member 2 can be driven by the first drive motor 34 about its own longitudinal axis.

On the other hand, the nut member 3 of the first ball screw assembly 36 has the engagement groove 16 (Fig. 7), into which an engagement piece 41 provided on the sleeve 39 is engaged so that the sleeve 39 can move axially together with the nut member 3. Because of the engagement between the engagement piece 41 fast with the sleeve 39 and the engagement groove 16 in the nut member 3, rotation of the screw member 2 caused by the first drive motor 34 results in an axial movement of the nut member 3 along the screw member 2, accompanied by advance or retraction of the sleeve 39 and the shifting finger 33 together with the nut member 3. By this advance or retraction, the shifting finger 33 can be engaged in one of the cutouts 32a in the shift rails 32.

Referring now to Fig. 10, the screw member 2 of the second ball screw assembly 37 shown therein is rotatably arranged within the housing 31 and is drivingly connected at one end to an output shaft of the second drive motor 35 through a coupling 42 for rotation together therewith. One of the trunnions 14 provided in the nut member 3 of the second ball screw assembly 37 is engaged in an engagement cutout 44a defined in a rocking lever 44. This rocking lever 44 is fixed with a rotary shaft 46 that is rotatably supported by the housing 31 through a support 45, and is rockable in respective directions opposite to each other about the longitudinal axis of the rotary shaft 46.

When the screw member 2 of the second ball screw assembly 37 is driven by the second drive motor 35, the nut member 3 moves axially along the screw member 2, accompanied by rocking motion of the rocking lever 44, which in turn rotate the rotary shaft 46. The rotary shaft 46 extends parallel to the first shaft member 38 shown in Fig. 9, the rotation of which can be transmitted to the first shaft member 38 through a drive transmitting means (not shown) such as, for example, a lever. Accordingly, when the screw member 2 of the second ball screw assembly 37 is driven by the second drive motor 35 to axially move the nut member 3 thereof along the screw member 2, the sleeve 39 can be rotated through the rocking lever 44, then through the rotary shaft 46 and finally through the first shaft member 38, causing one of the shift rails 32, then engaged with the shifting finger 33, to be selectively advanced or retracted to accomplish the shifting of the transmission gear (not shown).

The automated manual transmission of the structure shown and described by way of example makes use of the two ball screw assemblies 36 and 37, which are substantially identical in structure and function with the ball screw assemblies 1A and 1 according to the second and first embodiments of the present invention, respectively.

## Claims

1. A bridge type ball screw assembly for use in association with automobile actuators, which comprises a screw member (2) having an externally helically extending groove (4) defined therein, a nut member (3) having an internally helically extending groove (5) defined therein, a plurality of balls (6) that recirculate between the grooves (4, 5) of the screw (2) and nut members (3), and a bridge member (7) engaged in a mounting opening (8) defined in the nut member (3), wherein the bridge member (7) has a single connecting groove (9) for communicating between the neighboring convolutions of the internal helical groove (5) of the nut member (3) to allow the balls (6) to be successively recirculated from one convolution to the other and is made by the use of metal injection molding technique and wherein the bridge member (7) has wing areas (10) engaged in the internal groove (5) of the nut member (3) to avoid an undesirable separation of the bridge member (7) in a direction radially outwardly of the nut member (3),
**characterized in that**
the bridge member (7) has staking portions (11) to be fixed to an outer diameter portion of the nut member (3), such that the radially outwardly protuding staking portions (11) are engaged to a radially outer portion of the nut member (3).

2. The bridge type ball screw assembly as claimed in Claim 1, wherein the staking portion (11) is formed at each of opposite end protions of the bridge member (7) that are spaced in a direction lengthwise thereof.

3. The bridge type ball screw assembly as claimed in any one of Claims 1 or 2, wherein the bridge member (7) has a flat surface (7a) area defined at a location substantially intermediate of the length of the bridge member (7) and lying adjacent an outer peripheral surface of the nut member (3), which flat surface area (7a) has a length equal to or larger than 50% of the total length of the bridge member (7).

4. The bridge type ball screw assembly as claimed in Claim 3, wherein the flat surface area (7a) has a length not greater than 70% of the total length of the bridge member (7).

## Patentansprüche

1. Brückenartiger Kugelgewindeaufbau zur Verwendung in Verbindung mit Kraftfahrzeugaktuatoren, welcher ein Gewindeelement (2) mit einer darin definierten äußeren sich spiralförmig erstreckenden Hohlkehle (4), ein Mutterelement (3) mit einer darin definierten inneren sich spiralförmig erstreckenden Hohlkehle (5), eine Vielzahl von zwischen den Hohlkehlen (4, 5) der Gewinde- (2) und Mutterelemente (3) umlaufenden Kugeln (6) und ein Brückenelement (7) umfasst, welches im Eingriff mit einer im Mutterelement (3) definierten Montageöffnung (8) ist, wobei das Brückenelement (7) eine einzelne Verbindungshohlkehle (9) zur Verbindung zwischen den benachbarten Windungen der spiralförmigen Innenhohlkehle (5) des Mutterelements (3) aufweist, um den Kugeln (6) das nacheinander fortwährende Umlaufen von einer Windung zur anderen zu erlauben, und wobei es unter Verwendung einer Metallspritzgusstechnik hergestellt ist, und wobei das Brückenelement (7) in die Innenhohlkehle (5) des Mutterelements (3) eingreifende Flügelflächen (10) aufweist, um ein unerwünschtes Ablösen des Brückenelements (7) in einer radial nach außen verlaufenden Richtung des Mutterelements (3) zu verhindern,
**dadurch gekennzeichnet, dass**
das Brückenelement (7) an einem Außendurchmesserabschnitt des Mutterelements (3) zu befestigende Steckabschnitte (11) aufweist, so dass die radial nach außen vorspringenden Steckabschnitte (11) im Eingriff mit einem radialen Außenabschnitt des Mutterelements (3) sind.

2. Brückenartiger Kugelgewindeaufbau nach Anspruch 1, wobei der Steckabschnitt (11) an jedem der gegenüberliegenden Endabschnitte des Brückenelements (7), welche in einer Längsrichtung davon beabstandet sind, gebildet ist.

3. Brückenartiger Kugelgewindeaufbau nach einem der Ansprüche 1 oder 2, wobei das Brückenelement (7) einen ebenen Flächenbereich (7a) aufweist, welcher an einer Stelle im Wesentlichen zwischen der Länge des Brückenelements (7) definiert ist und angrenzend an eine außen umlaufende Fläche des Mutterelements (3) liegt, wobei der ebene Flächenbereich (7a) eine gleiche oder größere Länge als 50 % der Gesamtlänge des Brückenelements (7) aufweist.

4. Brückenartiger Kugelgewindeaufbau nach Anspruch 3, wobei der ebene Flächenbereich (7a) eine Länge aufweist, welche nicht größer als 70 % der Gesamtlänge des Brückenelements (7) ist.

## Revendications

1. Un assemblage de type pont de vis à billes pour l'utilisation en association avec des actionneurs automobiles lequel comprend un élément vis (2) ayant une rainure hélicoïdale externe (4) définie, un élément écrou (3) ayant une rainure hélicoïdale interne (5) définie, une multitude de billes (6) qui recirculent entre les rainures (4, 5) des éléments vis (2) et écrou (3) et un élément pont (7) engagé dans un orifice de montage (8) défini dans l'élément écrou (3) où l'élément pont (7) a une rainure de liaison simple (9) pour communiquer entre les circonvolutions adjacentes à la rainure hélicoïdale interne (5) de l'élément écrou (3) pour permettre aux billes (6) d'être recirculées successivement d'une circonvolution à l'autre et étant fabriqué selon la technique de moulage avec injection de métal et où l'élément pont (7) a des surfaces alaires (10) engagées dans la rainure interne (5) de l'élément écrou (3) pour éviter une séparation indésirable de l'élément pont (7) dans un sens radialement extérieur à l'élément écrou (3)
**caractérisé en ce que**
l'élément pont (7) a des parties rivetées (11) pour être fixé sur une section de diamètre extérieure de l'élément écrou (3) de sorte que les parties rivetées radialement en saillie vers l'extérieur (11) soient engagées vers une section radialement extérieure de l'élément écrou (3).

2. L'assemblage de type pont de vis à billes selon la revendication 1, la partie rivetée (11) étant formée à chacune des extrémités opposées de l'élément pont (7) qui sont espacées dans un sens longitudinal.

3. L'assemblage de type pont de vis à billes selon l'une des revendications 1 ou 2, l'élément pont (7) ayant une surface plane (7a) définie à une position en grande partie intermédiaire de la longueur de l'élément pont (7) et étant adjacente à la surface périphérique extérieure de l'élément écrou (3), la surface plane (7a) ayant une longueur égale ou supérieure à 50% de la longueur totale de l'élément pont (7).

4. L'assemblage de type pont de vis à billes selon la revendication 3, la surface plane (7a) ayant une longueur non supérieure à 70% de la longueur totale de l'élément pont (7).
